# FASCICULE DE BREVET EUROPEEN

(11) **EP 2 189 514 B1**
(45) Date de publication et mention de la délivrance du brevet: **31.07.2019**
(21) Numéro de dépôt: 09172479.9
(22) Date de dépôt: 07.10.2009
(51) Int. Cl.: C10L 11/04, C10L 11/06, B30B 11/16

(54) **BLOC ALLUME-FEU ET PROCÉDÉ DE FABRICATION DE CELUI-CI**
FEUERANZÜNDER UND VERFAHREN ZU DESSEN HERSTELLUNG
FIRELIGHTER AND PROCESS FOR THE MANUFACTURE THEREOF

(30) Priorité: 08.10.2008 FR 0856827
(43) Date de publication de la demande: 26.05.2010
(60) Demande divisionnaire: 12190065.8
(73) Titulaire: Crea, 74130 Bonneville (FR)
(72) Inventeur: Bodo, Lionel, 74130, AYZE (FR)
(74) Mandataire: Cabinet Poncet

(56) Documents cités:
- EP-A2- 1 690 658
- US-A- 3 297 419
- US-A- 3 988 121
- US-A- 4 046 518
- US-A- 4 236 897
- US-A- 4 333 738
- US-A- 4 810 255
- US-A- 4 824 352
- US-A- 5 958 090
- US-A1- 2001 001 670
- US-B1- 6 737 005

## Description

La présente invention concerne les aides pour l'allumage d'un feu dans un foyer ouvert ou fermé (cheminée, barbecue, etc.), et concerne plus particulièrement un bloc allume-feu inflammable par un utilisateur pour initier la combustion de matériaux pour un feu.

On connaît des blocs allume-feu de forme générale sensiblement parallélépipédique qu'un utilisateur enflamme et place ensuite dans un foyer pour faire un feu d'agrément ou de chauffage. Ce type de bloc allume-feu présente l'inconvénient d'être difficile à enflammer autrement que tenu entre les doigts de l'utilisateur en faisant lécher à une flamme de briquet ou d'allumette un angle saillant entre deux faces du bloc.

On comprend en effet qu'enflammer une surface latérale verticale ou la surface supérieure horizontale d'un bloc allume-feu sensiblement parallélépipédique est long et difficile, ce qui obligerait au maintien d'une flamme d'allumage pendant un temps trop élevé qu'il est impossible d'obtenir avec une simple allumette ou difficile à réaliser à l'aide d'un briquet du fait de réchauffement de ses parties métalliques constitutives qui brûlent l'utilisateur.

Il en résulte des difficultés d'utilisation, notamment lors de la phase d'allumage du bloc, ainsi qu'un manque de sécurité, l'utilisateur pouvant facilement se brûler. Et le risque de brûlure est d'autant plus important qu'il reste souvent dans les mains de l'utilisateur des traces de produit inflammable constituant le bloc allume-feu et qui peuvent également s'enflammer.

On connaît également des blocs allume-feu réalisés par le fractionnement en blocs sensiblement en forme de parallélépipèdes rectangles d'un panneau dérivé de bois MDF (Médium Density Fiberboard) ou panneau de fibres à moyenne densité également connu sous le nom de Médium. Lors du procédé de fabrication de tels blocs, le panneau de Medium est rainuré à intervalle régulier selon deux directions sensiblement perpendiculaires sur ses deux faces principales (dessus et dessous) tout en laissant une faible épaisseur d'âme centrale intacte. Le panneau rainuré est alors imprégné d'un produit hautement inflammable. Par exemple, le panneau rainuré peut être plongé dans un bain de paraffine en fusion. Le panneau rainuré est ensuite retiré du bain puis séché avant d'être fragmenté en petits blocs selon les rainures qui ont été pratiquées sur ses faces principales.

Les blocs allume-feu de ce type présentent une forme sensiblement parallélépipédique munie de quelques irrégularités ou excroissances latérales. Les dimensions et formes de ces irrégularités ou excroissances des faces latérales sont complètement aléatoires de sorte que lorsque ces blocs sont posés sur l'une de leurs faces supérieure ou inférieure planes (constituant antérieurement respectivement l'une des faces principales du panneau rainuré), il reste difficile et très aléatoire de chercher à les allumer en présentant une flamme d'allumage venant lécher les parois accessibles qui sont verticales ou horizontales par rapport à un plan de posage sur lequel ils reposent.

En outre, ce procédé de fabrication est long, onéreux, dangereux à mettre en oeuvre du fait de la manipulation de produits liquides hautement inflammables (tels que la paraffine fondue) et difficile à intégrer dans une chaîne de fabrication du fait de son caractère discontinu.

Enfin, les panneaux de fibres à moyenne densité étant fabriqués en utilisant des colles hautement toxiques, ces blocs allume-feu dégagent lors de leur combustion des vapeurs et fumées dangereuses pour l'organisme.

Les documents US 4,810,255, US 4,333,738, US 4,046,518, US 3,988,121, US 3,297,419 et US 5,958,090 décrivent des blocs allume-feu qui ne peuvent pas être facilement enflammés quelle que soit la direction d'approche de la flamme d'allumage lorsque ceux-ci reposent sur un plan.

Le document US 3,988,121 décrit un bloc allume-feu selon le préambule de la revendication 1.

Le document US 2001/001670 A1 décrit un bloc allume-feu selon le préambule de la revendication 1, comportant deux faces opposées, à savoir :
- une première face qui est cylindrique, c'est-à-dire convexe selon une première direction et réglée selon une deuxième direction sensiblement perpendiculaire à la première direction,
- une deuxième face qui est convexe selon la première direction et concave selon la deuxième direction.

Un premier problème proposé par l'invention est de concevoir un bloc allume-feu qui soit facilement inflammable sans avoir à être tenu entre les doigts d'un utilisateur, qui ne s'éteigne pas après avoir été allumé par l'utilisateur, qui présente systématiquement une zone d'allumage facile pour l'enflammer rapidement, et qui soit sensiblement dépourvu de produits chimiques inflammables toxiques et volatiles.

Simultanément, l'invention vise à concevoir un bloc allume-feu présentant systématiquement une zone d'allumage facile pour l'enflammer rapidement et ce quelle que soit la direction d'approche de la flamme d'allumage amenée par l'utilisateur.

L'invention cherche en outre à proposer un procédé de fabrication de blocs allume-feu qui soit plus facile à mettre en oeuvre industriellement en réduisant les coûts, les pertes d'énergie et les risques d'accident.

Selon encore un autre aspect, l'invention propose un dispositif de fabrication de blocs allume-feu qui soit peu onéreux, peu encombrant, simple et rapide à manipuler pour la réalisation de blocs allume-feu de bonne qualité.

Pour atteindre ces objets, ainsi que d'autres, l'invention propose un bloc allume-feu selon la revendication 1.

Un tel bloc allume-feu est facilement inflammable par un utilisateur qui peut amener une flamme d'allumage au voisinage de la face de contact dirigée vers le plan et restant à l'écart dudit plan pour l'enflammer rapidement. En outre, après qu'une telle face ait été embrasée, on est certain que celle-ci ne s'éteindra pas : cette face de contact restant à l'écart du plan, l'amenée d'oxygène nécessaire à la combustion sera toujours assurée, et ce d'autant plus que le bloc allume-feu repose en équilibre stable sur la zone d'appui.

Une position d'équilibre "stable" est définie comme étant la position dans laquelle reviendra se placer un objet dans le cas où un élément extérieur le sollicite en léger déplacement à l'écart de cette position.

La partie de face de contact dirigée vers ledit plan et restant à l'écart dudit plan occupant toute la périphérie de la zone d'appui proéminente, le bloc allume-feu peut être facilement embrasé sans être tenu entre les doigts d'un utilisateur, et ce quelle que soit la direction d'approche de la flamme d'allumage amenée par l'utilisateur ou par un bloc allume-feu adjacent.

Les deux faces de contact sont convexes selon toutes les directions transversales. Une telle forme est simple à réaliser et très efficace dans son fonctionnement pour faire reposer le bloc allume-feu sur un plan avec une partie de face de contact dirigée vers ledit plan et restant à l'écart dudit plan tout autour de la zone d'appui proéminente.

Le bloc allume-feu comporte deux faces de contact opposées convexes permettant chacune un appui stable sur un plan et se rejoignant selon un bord périphérique saillant. Un tel bloc allume-feu repose nécessairement sur l'une ou l'autre de ces deux faces de contact convexes. Il est ainsi inutile pour l'utilisateur de prêter attention au bloc allume-feu pour le poser d'une manière particulière sur un plan : le bloc allume-feu sera systématiquement placé posé dans une bonne position favorable à un allumage rapide et facile et permettant l'entretien et le maintien de la combustion.

De préférence, on peut prévoir que :
- le bloc allume-feu comporte une couche de surface cohérente en mélange de copeaux de bois ou de sciure de bois, et de paraffine, la cohérence de la couche de surface étant procurée par la paraffine qui adhère au moins partiellement aux copeaux de bois ou à la sciure de bois,
- à l'intérieur du bloc allume-feu, sous la couche de surface cohérente, le mélange compressé de copeaux de bois ou de sciure de bois avec la paraffine en poudre est plus friable que le mélange de la couche de surface.

La couche de surface cohérente confère une cohérence globale au bloc allume-feu pour éviter sa désagrégation. Cette couche de surface dure et cohérente limite en outre l'absorption d'humidité par les copeaux de bois ou la sciure de bois contenue dans le bloc, absorption d'humidité qui pourrait le faire éclater ou s'effriter du fait de la variation volumique des copeaux ou de la sciure se produisant lors de l'absorption.

De préférence, les copeaux de bois ou particules de sciure de bois peuvent avoir une taille telle qu'ils sont aptes à traverser un tamis dont la taille de maille est de 4 mm, et présentent une dimension maximale inférieure à 10 mm, de préférence inférieure à 8 mm. On évite ainsi la présence de copeaux de trop grande taille qui pourraient induire un manque de cohérence du bloc allume-feu et pourraient provoquer une désagrégation prématurée du bloc allume-feu.

De préférence, le mélange peut comporter une teneur en paraffine comprise entre 20 % et 60 % en poids. Une telle teneur en paraffine procure un allumage rapide et facile en ne maintenant la flamme d'allumage de briquet ou d'allumette qu'un très faible temps. On limite ainsi les risques de brûlure pour l'utilisateur.

Avantageusement, on peut prévoir que le mélange comporte également un liant, de préférence du lignosulfite de calcium. Un tel liant améliore la résistance à l'humidité du bloc allume-feu, renforce sa cohérence en surface pour éviter toute désagrégation et procure une meilleure dureté et une meilleure densité qui viennent augmenter l'autonomie de combustion du bloc allume-feu de façon importante.

Pour fabriquer un bloc allume-feu tel que défini ci-dessus, l'invention propose en outre un procédé de fabrication selon la revendication 7.

Un tel procédé utilise de la paraffine à l'état solide. La paraffine est ainsi plus facile à manipuler et moins dangereuse qu'à l'état liquide où elle est hautement inflammable. En outre, on évite de gaspiller de l'énergie en faisant fondre la paraffine pour la solidifier à nouveau après. La compression du mélange entre les matrices provoque un léger échauffement de la paraffine contenue dans le mélange au contact entre celui-ci et les matrices, favorisant la réalisation d'une couche de surface cohérente conférant une bonne solidité et stabilité au bloc allume-feu ainsi fabriqué.

De préférence, lors des étapes b) et c), on peut introduire le mélange dans une presse à agglomérer rotative comportant deux roues tangentes rotatives de compression munies d'alvéoles de compression concaves, la compression étant réalisée par la rotation des roues tangentes rotatives de compression. On dispose ainsi d'un procédé de fabrication continu qui peut être démarré ou arrêté sur demande à n'importe quel moment, et ce d'autant plus que les matières traitées sont utilisées de façon continue et progressive, dans leur état brut naturel et à température ambiante. Le procédé est peu onéreux et la concavité des alvéoles de compression permet de réaliser un bloc allume-feu avec des faces de contact convexes de façon simple et rapide.

Les deux roues tangentes rotatives de compression de la presse à agglomérer peuvent être des roues mouleuses comportant chacune des alvéoles de compression concaves venant en correspondance lors de la rotation des roues tangentes rotatives de compression pour enfermer et compresser une quantité de mélange. On réalise ainsi de façon simple et rapide les deux faces de contact convexes d'un bloc allume-feu se rejoignant selon un bord périphérique saillant.

Avantageusement, le mélange peut être introduit sous pression dans la presse à agglomérer, de préférence au moyen d'une vis sans fin d'amenée et de compression. La vis sans fin d'amenée et de compression permet de réaliser une précompression du mélange pour assurer un meilleur remplissage des alvéoles de compression. On améliore ainsi grandement la qualité, la densité et la compacité des blocs allume-feu, et donc leur autonomie de combustion.

De préférence, les copeaux de bois ou la sciure de bois peuvent présenter avant compression un taux d'humidité inférieur à 15 % en poids, compris de préférence entre 8 % et 12 % en poids. Un tel taux d'humidité, sensiblement égal au taux d'humidité de l'air ambiant, assure qu'une fois fabriqué le bloc allume-feu n'aura pas tendance à absorber de l'humidité présente dans l'air ambiant lors de son stockage, ce qui pourrait nuire à sa cohérence et le faire éclater. On évite également d'avoir une humidité trop élevée dans le mélange avant compression. En effet, l'eau étant incompressible, une trop forte humidité dans le mélange rendrait impossible une bonne compression de celui-ci et induirait un risque de désagrégation ultérieure des blocs allume-feu.

De préférence, la poudre de paraffine peut présenter une granulométrie comprise entre 600 µm et 2 mm, de préférence entre 600 µm et 800 µm. La poudre de paraffine présente ainsi une taille suffisante pour agglomérer les copeaux de bois ou les particules de sciure de bois entre eux par une simple compression sans échauffement particulier. Et la taille de grains de paraffine choisie reste suffisamment faible pour qu'en surface du bloc allume-feu, où se produit un léger échauffement lors de la compression, la paraffine soit suffisamment ramollie, voire fondue, pour procurer une excellente cohérence en surface du bloc allume-feu.

En surface du bloc allume-feu, la paraffine recouvre, enveloppe les copeaux ou particules de bois et est même en partie absorbée dans les copeaux ou particules de bois lorsque l'échauffement l'a liquéfiée, ce qui a pour effet de rendre sensiblement étanche en surface le bloc allume-feu du fait du caractère hydrophobe de la paraffine.

Il est important de veiller à ne pas choisir une poudre de paraffine de granulométrie trop élevée, le grain de paraffine ayant alors tendance à fondre sans s'enflammer en présence d'une flamme. La paraffine fondue aurait ainsi tendance à couler sans s'enflammer, risquerait d'éteindre la flamme qui a fondu le grain de paraffine et pourrait même brûler un utilisateur qui chercherait à allumer le bloc allume-feu en le tenant dans ses doigts. La granulométrie choisie facilite ainsi la combustion, diminue le risque de brûlure d'un utilisateur, améliore la cohérence et la qualité du bloc allume-feu.

L'invention propose également un dispositif de fabrication de bloc allume-feu, comportant :
- un bol d'amenée de mélange, de préférence de forme conique et muni d'une vis sans fin conique d'amenée et de compression,
- une presse à agglomérer, comportant de préférence deux roues tangentes rotatives de compression,
- un bac de réception.

D'autres objets, caractéristiques et avantages de la présente invention ressortiront de la description suivante de modes de réalisation particuliers, faite en relation avec les figures jointes, parmi lesquelles :
- la figure 1 est une vue en perspective d'un premier mode de réalisation de bloc allume-feu ne faisant pas partie de l'invention ;
- la figure 2 est une vue en coupe transversale du bloc allume-feu de la figure 1 ;
- la figure 3 est une vue en perspective d'un second mode de réalisation de bloc allume-feu faisant partie de la présente invention ;
- la figure 4 est une vue en coupe transversale du bloc allume-feu de la figure 3 ;
- la figure 5 est une vue en coupe transversale d'un troisième mode de réalisation de bloc allume-feu faisant partie de la présente invention ; et
- la figure 6 est une vue schématique en coupe partielle d'un dispositif de fabrication de blocs allume-feu selon l'invention.

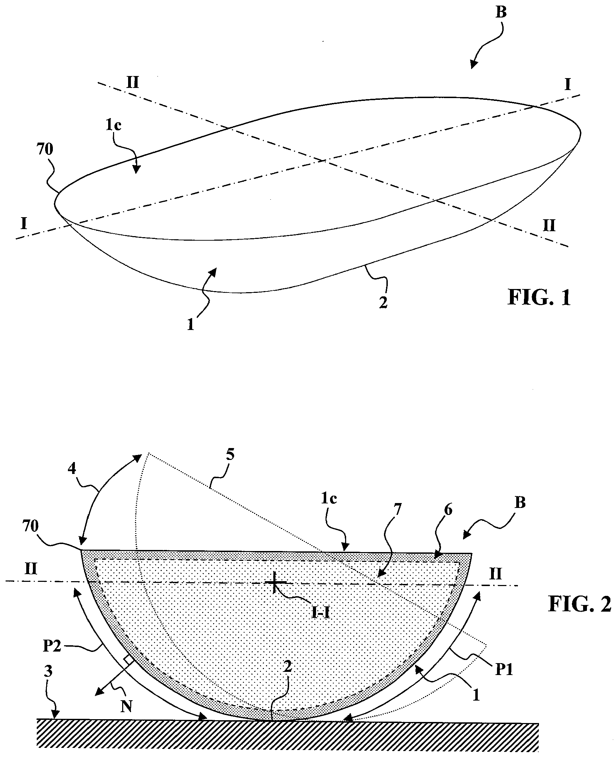

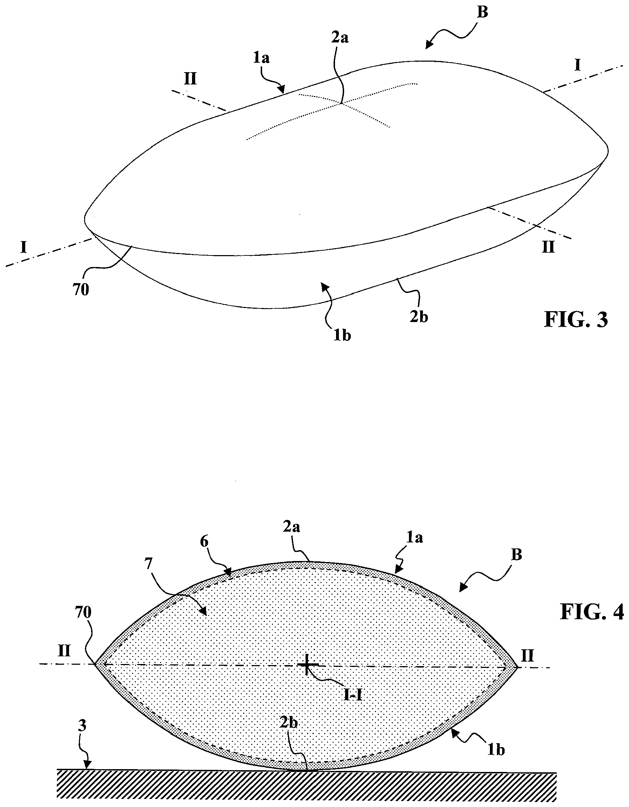

Les figures 1 à 5 illustrent trois modes de réalisation différents de blocs allume-feu. Les modes de réalisation illustrés sur les figures 3 à 5 font partie de l'invention. Le premier mode de réalisation, illustré sur les figures 1 et 2, bien que ne faisant pas partie de l'invention, permet d'illustrer certaines caractéristiques de l'invention.

Un premier mode de réalisation, ne faisant pas partie de l'invention, est illustré sur les figures 1 et 2. Sur ces figures est représenté un bloc allume-feu B inflammable par un utilisateur pour initier la combustion de matériaux pour un feu à foyer ouvert ou fermé. Ce bloc allume-feu B comporte un mélange compressé de copeaux de bois, ou de sciure de bois, et de paraffine en poudre. Il comporte une face de contact 1 à zone d'appui 2 proéminente, et une face opposée 1c plane. La face de contact 1 et la face opposée 1c plane se rejoignent selon un bord périphérique 70 saillant et continu, contenu dans un plan qui, dans ce mode de réalisation, est le plan de la face opposée 1c. Le bloc allume-feu B est conformé de façon à reposer sur la zone d'appui 2 en équilibre stable sur un plan 3 avec des parties P1 et P2 de face de contact 1 dirigées vers le plan 3 et restant à l'écart dudit plan 3. Les parties P1 et P2 de face de contact 1 sont dirigées vers le plan 3 puisque, en chaque point des parties P1 et P2, la normale N à la face de contact 1 est dirigée vers le plan 3.

Sur la figure 2, le bloc allume-feu B est en équilibre stable sur le plan 3. En effet, après un écart par rapport à cette position, par exemple après un mouvement de basculement illustré par la double flèche 4 et l'enveloppe 5 en pointillés du bloc allume-feu B, le bloc allume-feu B a tendance à revenir dans sa position stable d'équilibre.

Pour embraser le bloc allume-feu B selon l'invention, l'utilisateur peut le poser dans la position illustrée sur la figure 2 et approcher une flamme d'allumage au contact des parties P1 et/ou P2 de face de contact 1. Les parties P1 et P2 de face de contact 1 étant dirigées vers le plan 3 et restant à l'écart du plan 3, l'utilisateur peut engager la flamme sous les parties P1 et P2 afin de les embraser facilement, sans avoir à tenir le bloc allume-feu B dans ses doigts.

Une fois embrasé au niveau des parties P1 et/ou P2, le bloc allume-feu B ne s'éteindra pas, les parties P1 et P2 restant en permanence à l'écart dudit plan 3. Et si par hasard le bloc allume-feu B venait à être pivoté à l'écart de sa position de posage, celui-ci reviendrait automatiquement dans sa position d'équilibre stable illustrée sur la figure 2, garantissant la présence d'oxygène au contact des parties P1 et P2 de face de contact 1 pour que perdure la combustion du bloc allume-feu B.

On voit plus particulièrement sur la figure 2 que le bloc allume-feu B comporte une couche de surface 6 cohérente en mélange de copeaux de bois ou de sciure de bois et de paraffine. La cohérence de la couche de surface 6 est procurée par les grains de paraffine qui adhèrent au moins partiellement aux copeaux de bois ou à la sciure de bois. Dans la zone intérieure 7 du bloc allume-feu B, sous la couche de surface 6 cohérente, le mélange de copeaux de bois ou de sciure de bois avec la paraffine en poudre est plus friable que le mélange de la couche de surface 6. La couche de surface 6 confère une bonne cohérence au bloc allume-feu B afin d'éviter sa désagrégation. En outre, la couche de surface 6 limite l'absorption d'humidité par les copeaux de bois ou la sciure de bois contenue dans le bloc allume-feu B.

Un second mode de réalisation, faisant partie de l'invention, est illustré sur les figures 3 et 4. Dans ce second mode de réalisation, le bloc allume-feu B comporte deux faces de contact 1a et 1b convexes à zones d'appui respectives 2a et 2b proéminentes. Les faces de contact 1a et 1b opposées convexes permettent chacune un appui stable sur un plan et se rejoignent selon un bord périphérique 70 saillant et continu. La probabilité est alors élevée que, sans même que l'utilisateur n'ait à y prêter attention, le bloc allume-feu B se retrouve jeté en équilibre stable sur l'une des zones d'appui 2a ou 2b lorsque le bloc allume-feu B est jeté dans un foyer pour préparer un feu.

Le bloc allume-feu B de la figure 3 ne peut ainsi reposer que sur l'une de ses deux faces de contact 1a ou 1b convexes et est donc systématiquement posé dans une bonne position d'allumage, d'entretien et de maintien de combustion sans même que l'utilisateur n'ait à y prêter attention.

On voit plus particulièrement sur la figure 4 que le bloc allume-feu B présente une section sensiblement en forme de lentille biconvexe.

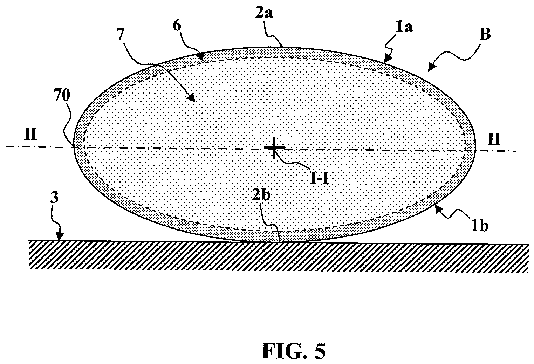

En alternative au mode de réalisation des figures 3 et 4, on pourra réaliser le bloc allume-feu B conformément à un troisième mode de réalisation, faisant partie de l'invention, représenté sur la figure 5. Dans ce troisième mode de réalisation, le bloc allume-feu B présente une section transversale sensiblement en forme d'ovale ou d'ellipse.

Dans les modes de réalisation des figures 1 à 5, les faces de contact 1, 1a et 1b sont convexes selon toutes les directions transversales telles que la direction axiale I-I et la direction transversale II-II. Les directions transversales telles que les directions I-I et II-II sont sensiblement parallèles au plan défini par le bord périphérique 70 saillant continu.

Dans le mode de réalisation illustré sur les figures 1 et 2, la face de contact 1 est entièrement convexe, selon toutes les directions transversales, telles que les directions I-I et II-II, ou directions dans le plan de la face plane 1c.

Cette convexité selon toutes les directions transversales telles que les directions I-I et II-II confère une forme particulière de face de contact 1, 1a et 1b aux blocs allume-feu B des figures 1 à 5, forme particulière qui permet à ceux-ci, en position d'équilibre stable sur un plan, de présenter une partie des faces de contact 1, 1a ou 1b dirigée vers ledit plan, restant à l'écart dudit plan et occupant toute la périphérie des zones d'appui 2, 2a et 2b proéminentes.

En l'espèce, cette convexité confère au bloc allume-feu B représenté sur la figure 3 une section sensiblement en forme de lentille biconvexe comme représenté sur la figure 4, et un bord 70 ovale ou elliptique.

Un utilisateur peut ainsi enflammer rapidement et facilement les blocs allume-feu B des figures 1 à 5 en présentant une flamme d'allumage selon n'importe quelle direction radiale contenue dans un plan parallèle à celui défini par le bord 70 saillant. Et la combustion se propage aisément entre blocs allume-feu adjacents par leurs bords 70 saillants.

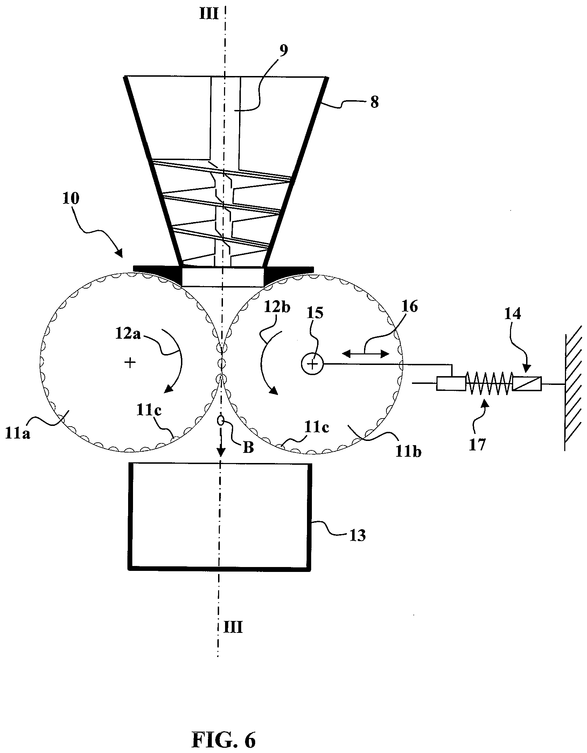

Un dispositif pour la fabrication des blocs allume-feu B tels qu'illustrés sur les figures 1 à 5 est représenté sur la figure 6. Ce dispositif comporte un bol d'amenée de mélange 8 conique. Le bol d'amenée de mélange 8 est muni d'une vis sans fin 9 conique d'amenée et de compression qui peut être mise en rotation selon la direction axiale III-III. Le dispositif comporte en outre une presse à agglomérer 10 rotative comportant deux roues tangentes rotatives de compression 11a et 11b. Les deux roues tangentes rotatives de compression 11a et 11b de la presse à agglomérer 10 sont des roues mouleuses comportant chacune des alvéoles de compression 11c radiales disposées sur la surface périphérique. Les alvéoles de compression 11c de la roue tangente rotative de compression 11a viennent en correspondance chacune avec une alvéole de compression 11c de la roue tangente rotative de compression 11b lorsque les roues tangentes rotatives de compression 11a et 11b sont entraînées selon des mouvements synchronisés de rotations axiales de sens inverses indiqués par les flèches 12a et 12b. On obtient ainsi des blocs allume-feu B à deux faces de contact 1a et 1b opposées (figures 3 à 5).

Une alternative au dispositif représenté sur la figure 6, laquelle alternative ne fait pas partie de l'invention, consiste à prévoir que l'une des roues tangentes rotatives de compression 11a ou 11b de la presse à agglomérer 10 est une roue pleine tandis que l'autre est une roue mouleuse munie d'alvéoles de compression 11c concaves. On obtient ainsi des blocs allume-feu à une face de contact 1 (figures 1 et 2) ne faisant pas partie de l'invention.

Les alvéoles de compression 11c sont concaves selon toutes les directions transversales afin de procurer aux blocs allume-feu au moins une face de contact 1, 1a ou 1b convexe selon toutes directions.

On peut également chercher à réaliser les blocs allume-feu B selon l'invention par compression d'un mélange de copeaux de bois, ou de sciure de bois, et de paraffine en poudre entre une première et une seconde matrices déplaçables relativement l'une par rapport à l'autre par un mouvement de translation, mais le procédé est alors discontinu.

Le procédé de fabrication des blocs allume-feu B selon l'invention comporte les étapes suivantes :
a) fournir un mélange de copeaux de bois, ou de sciure de bois, et de paraffine en poudre,
b) introduire le mélange dans au moins une alvéole de compression 11c concave portée par une première matrice,
c) compresser le mélange dans l'alvéole de compression 11c au moyen d'une seconde matrice,
d) démouler la quantité de mélange contenue dans l'alvéole de compression 11c.

Dans le cas de l'utilisation d'un dispositif semblable à celui représenté sur la figure 6, le rôle des première et seconde matrices est assuré par les deux roues tangentes rotatives de compression 11a et 11b munies des alvéoles de compression 11c concaves. La compression est alors réalisée par la rotation des roues tangentes rotatives de compression 11a et 11b selon les mouvements illustrés par les flèches 12a et 12b.

En pratique, lors de l'utilisation du dispositif représenté sur la figure 6, on introduit un mélange de copeaux de bois, ou de sciure de bois, et de paraffine en poudre dans le bol d'amenée de mélange 8. La vis sans fin 9 conique amène et pré-compresse le mélange dans les alvéoles de compression 11c concaves afin de mieux remplir ces dernières. Simultanément, les roues tangentes rotatives de compression 11a et 11b sont entraînées en rotations de sens opposés et coopèrent pour enfermer et comprimer une quantité de mélange dans chacune de leurs alvéoles de compression 11c venant en correspondance lors de leur mouvement de rotation axiale. Lorsque les alvéoles de compression 11c sont venues en correspondance et s'écartent du fait du mouvement relatif des deux roues tangentes rotatives de compression 11a et 11b, le mélange compressé est démoulé et le bloc allume-feu B recueilli dans un bac de réception 13.

Au cours de la compression du mélange dans les alvéoles de compression 11c, le mélange, et plus particulièrement la partie de mélange au contact des alvéoles de compression 11c concaves, est légèrement échauffé. La paraffine alors présente dans cette zone a tendance à se ramollir, voire à fondre partiellement en adhérant de façon forte aux copeaux de bois ou à la sciure de bois environnante en les enveloppant sensiblement. On réalise ainsi la couche de surface 6 cohérente des blocs allume-feu B alors que le mélange compressé de copeaux de bois, ou de sciure de bois, et de paraffine en poudre à l'intérieur du bloc allume-feu B reste plus friable car pas ou peu affecté thermiquement au cours du procédé de fabrication.

Dans le dispositif illustré sur la figure 6, l'axe de rotation 15 de la roue tangente rotative de compression 11b est monté à coulissement pour autoriser des mouvements de translation bidirectionnelle illustrés par la double flèche 16. Ces mouvements de translation s'effectuent à l'encontre de la force de moyens élastiques de rappel 17 dont la force de rappel est ajustable par des moyens de réglage 14.

On peut ainsi régler de façon simple la force de compression appliquée au mélange enfermé dans les alvéoles de compression 11c, pour fabriquer des blocs allume-feu B plus ou moins denses et compacts. Et on évite également d'endommager le dispositif en cas de compression excessive du mélange. De façon générale, plus la force de compression est élevée plus l'autonomie de combustion du bloc allume-feu B sera grande.

Dans le mélange introduit dans le bol d'amenée de mélange 8, les copeaux de bois ou particules de sciure de bois sont un tamisat obtenu par un tamis dont la taille de maille est de 4 mm, et présentent une dimension maximale inférieure à 10 mm de préférence inférieure à 8 mm. On évite ainsi que les copeaux de bois ou les particules de sciure de bois présentent une taille susceptible d'induire un manque de cohérence dans le bloc allume-feu B.

Afin de pouvoir compresser convenablement le mélange, il est avantageux d'utiliser des copeaux de bois ou de la sciure de bois présentant un taux d'humidité inférieur à 15 % en poids. Un taux d'humidité de 15 % en poids signifie que 100 g de copeaux de bois ou de sciure de bois contiennent 15 g d'eau libre.

De préférence, le taux d'humidité des copeaux de bois ou de la sciure de bois peut être compris entre 8 % et 12 % en poids. Un tel taux d'humidité est suffisamment faible pour qu'on puisse comprimer efficacement le mélange qui ne contient pas trop d'eau, et un tel taux est suffisamment voisin du taux d'humidité de l'air ambiant pour que le mélange après compression n'ait pas tendance à réabsorber de l'humidité contenue dans l'air ambiant en produisant l'éclatement ou la désagrégation du bloc allume-feu B.

On a obtenu de bons résultats en utilisant de la poudre de paraffine présentant une granulométrie comprise entre 600 µm et 2 mm, de préférence entre 600 µm et 800 µm. Une telle taille de grains de paraffine est suffisante pour agglomérer convenablement les copeaux de bois ou les particules de sciure de bois entre eux par simple compression sans nécessiter d'échauffement particulier. Et une telle taille est suffisamment faible pour qu'en surface du bloc allume-feu B, au contact des alvéoles de compression 11c où se produit un léger échauffement, les grains de paraffine soient suffisamment ramollis ou fondus pour réaliser la couche de surface 6 cohérente.

Après sa fabrication, le bloc allume-feu B fabriqué par le procédé selon l'invention présente une surface relativement brillante, lisse et dure, tandis que son intérieur est plus mat, plus granuleux et plus friable.

Dans le mélange introduit dans le bol d'amenée de mélange 8, on a obtenu de bons résultats en prévoyant une teneur en paraffine comprise entre 20 % et 60 % en poids du mélange.

On peut en outre introduire un liant dans le mélange, tel que du lignosulfite de calcium, pour améliorer la résistance à l'humidité du bloc allume-feu B, pour améliorer la cohérence du bloc allume-feu B, particulièrement dans la couche de surface 6, et pour améliorer la dureté et donc augmenter l'autonomie de combustion du bloc allume-feu B.

On comprendra que le dispositif selon l'invention est peu onéreux, peu encombrant, simple et sans danger à manipuler. Le procédé de fabrication selon l'invention permet de manipuler les quantités de matières premières de façon continue sans recourir à une fusion de la paraffine qui gaspillerait de l'énergie et augmenterait le danger du fait de la grande inflammabilité de la paraffine liquide à haute température.

La présente invention n'est pas limitée aux modes de réalisation qui ont été explicitement décrits, mais elle en inclut les diverses variantes et généralisations contenues dans le domaine des revendications ci-après.

## Revendications

1. Bloc allume-feu (B) inflammable par un utilisateur pour initier la combustion de matériaux pour un feu à foyer ouvert ou fermé, comportant un mélange compressé de copeaux de bois, ou de sciure de bois, et de paraffine en poudre, comportant deux faces de contact (1a, 1b) à zone d'appui (2a, 2b) proéminente permettant au bloc allume-feu (B) de reposer sur la zone d'appui (2a, 2b) en équilibre stable sur un plan (3) avec une partie (P1, P2) de face de contact (1a, 1b) dirigée vers ledit plan (3) et restant à l'écart dudit plan (3),
**caractérisé en ce que** :
- le bloc allume-feu (B) est conformé de telle façon que, en position d'équilibre stable sur un plan (3), la partie (P1, P2) de face de contact (1a, 1b) dirigée vers ledit plan (3) et restant à l'écart dudit plan (3) occupe toute la périphérie de la zone d'appui (2a, 2b) proéminente,
- les faces de contact (1a, 1b) sont convexes selon toutes les directions transversales (I-I, II-II),
- les deux faces de contact (1a, 1b) convexes se rejoignent selon un bord périphérique saillant (70) continu,
- en coupe, le bloc allume-feu (B) présente une section sensiblement en forme de lentille biconvexe, en forme d'ovale, ou en forme d'ellipse.

2. Bloc allume-feu (B) selon la revendication 1, **caractérisé en ce que** :
- il comporte une couche de surface (6) cohérente en mélange de copeaux de bois ou de sciure de bois, et de paraffine, la cohérence de la couche de surface (6) étant procurée par la paraffine qui adhère au moins partiellement aux copeaux de bois ou à la sciure de bois,
- à l'intérieur du bloc allume-feu (B), sous la couche de surface (6) cohérente, le mélange compressé de copeaux de bois ou de sciure de bois avec la paraffine en poudre est plus friable que le mélange de la couche de surface (6).

3. Bloc allume-feu (B) selon l'une quelconque des revendications 1 à 2, **caractérisé en ce que** les copeaux de bois ou particules de sciure de bois ont une taille telle qu'ils sont aptes à traverser un tamis dont la taille de maille est de 4 mm, et présentent une dimension maximale inférieure à 10 mm, de préférence inférieure à 8 mm.

4. Bloc allume-feu (B) selon l'une quelconque des revendications 1 à 3, **caractérisé en ce que** la poudre de paraffine présente une granulométrie comprise entre 600 µm et 2 mm, de préférence entre 600 µm et 800 µm.

5. Bloc allume-feu (B) selon l'une quelconque des revendications 1 à 4, **caractérisé en ce que** le mélange comporte une teneur en paraffine comprise entre 20 % et 60 % en poids.

6. Bloc allume-feu (B) selon l'une quelconque des revendications 1 à 5, **caractérisé en ce que** le mélange comporte également un liant, de préférence du lignosulfite de calcium.

7. Procédé de fabrication d'un bloc allume-feu (B) selon l'une quelconque des revendications 1 à 6, comportant les étapes suivantes :
a) fournir un mélange de copeaux de bois ou de sciure de bois et de paraffine en poudre,
b) introduire le mélange dans au moins une alvéole de compression (11c) concave portée par une première matrice,
c) compresser le mélange dans l'alvéole de compression (11c) au moyen d'une seconde matrice,
d) démouler la quantité de mélange contenue dans l'alvéole de compression (11c), **caractérisé en ce que** l'alvéole de compression (11c) est conformée de telle sorte que :
- elle confère au bloc allume-feu (B) deux faces de contact (1a, 1b) à zone d'appui (2a, 2b) proéminente permettant au bloc allume-feu (B) de reposer sur la zone d'appui (2a, 2b) en équilibre stable sur un plan (3) avec une partie (P1, P2) de face de contact (1, 1a, 1b) dirigée vers ledit plan (3), restant à l'écart dudit plan (3), et occupant toute la périphérie de la zone d'appui (2a, 2b) proéminente,
- l'alvéole de compression (11c) est concave selon toutes les directions transversales (I-I, II-II).

8. Procédé de fabrication selon la revendication 7, **caractérisé en ce que**, lors des étapes b) et c), on introduit le mélange dans une presse à agglomérer (10) comportant deux roues tangentes rotatives de compression (11a, 11b) munies d'alvéoles de compression (11c) concaves, la compression étant réalisée par la rotation des roues tangentes rotatives de compression (11a, 11b).

9. Procédé de fabrication selon la revendication 8, **caractérisé en ce que** les deux roues tangentes rotatives de compression (11a, 11b) de la presse à agglomérer (10) sont des roues mouleuses comportant chacune des alvéoles de compression (11c) concaves venant en correspondance lors de la rotation des roues tangentes rotatives de compression (11a, 11b) pour enfermer et compresser une quantité de mélange.

10. Procédé selon l'une des revendications 8 ou 9, **caractérisé en ce que** le mélange est introduit sous pression dans la presse à agglomérer (10), de préférence au moyen d'une vis sans fin (9) d'amenée et de compression.

11. Procédé selon l'une quelconque des revendications 7 à 10, **caractérisé en ce que** les copeaux de bois ou la sciure de bois présentent avant compression un taux d'humidité inférieur à 15 % en poids, compris de préférence entre 8 % et 12 % en poids.

12. Procédé selon l'une quelconque des revendications 7 à 11, **caractérisé en ce que** les copeaux de bois ou la sciure de bois utilisés pour le mélange sont un tamisat obtenu par un tamis de taille de maille de 4 mm, et présentent une dimension maximale inférieure à 10 mm, de préférence inférieure à 8 mm.

13. Procédé selon l'une quelconque des revendications 7 à 12, **caractérisé en ce que** la poudre de paraffine présente une granulométrie comprise entre 600 µm et 2 mm, de préférence entre 600 µm et 800 µm.

14. Procédé selon l'une quelconque des revendications 7 à 13, **caractérisé en ce que** le mélange comporte une teneur en paraffine comprise entre 20 % et 60 % en poids.

15. Procédé selon l'une quelconque des revendications 7 à 14, **caractérisé en ce que** le mélange comporte également un liant, de préférence du lignosulfite de calcium.

## Patentansprüche

1. Feueranzünder (B), der durch einen Anwender zum Auslösen der Verbrennung von Materialien an einer offenen oder geschlossenen Feuerstelle entflammbar ist, umfassend eine Mischung gepresster Holz- oder Sägespäne und Paraffinpulver, umfassend zwei Kontaktseiten (1a, 1b) in einer vorstehenden Stützzone (2a, 2b), die es ermöglicht, den Feueranzünder (B) über der Stützzone (2a, 2b) in einem stabilen Gleichgewicht auf einer Fläche (3) mit einem zur Fläche (3) gerichteten und abseits der genannten Fläche (3) verbleibenden Teil (P1, P2) der Kontaktseiten (1a, 1b) zu lagern, **dadurch gekennzeichnet, dass**:
- der Feueranzünder (B) derart angepasst ist, dass in der stabilen Gleichgewichtsposition auf der Fläche (3) der Teil (P1, P2) der Kontaktseiten (1a, 1b), der gegen die genannte Fläche (3) gerichtet ist und abseits der genannten Fläche (3) verbleibt, die gesamte Umgebung um die vorstehende Stützzone (2a, 2b) bedeckt,
- die Kontaktseiten (1a, 1b) konvex entlang aller Transversalrichtungen (I-I, II-II) sind,
- die zwei konvexen Kontaktseiten (1a, 1b) entlang einer scharfen kontinuierlichen Außenkante (70) zusammentreffen,
- der Feueranzünder (B) aufgeschnitten einen Querschnitt im Wesentlichen in Form einer bikonvexen Linse, in Form einer Ovale oder in Form einer Ellipse zeigt.

2. Feueranzünder (B) nach Anspruch 1, **dadurch gekennzeichnet, dass**:
- er eine sich an die Mischung gepresster Holz- oder Sägespäne und Paraffin anschließende Oberflächenschicht (6) umfasst, wobei der Anschluss der Oberflächenschicht (6) durch das Paraffin gebildet ist, das wenigstens teilweise an den Holz- oder Sägespänen anhaftet,
- im Inneren des Feueranzünders (B) unter der sich anschließenden Oberflächenschicht (6) die Mischung gepresster Holz- oder Sägespäne und Paraffinpulver bröckeliger ist, als die Mischung der Oberflächenschicht (6).

3. Feueranzünder (B) nach einem der Ansprüche 1 bis 2, **dadurch gekennzeichnet, dass** die Holzspäne oder die Sägemehlpartikel eine derartige Größe besitzen, dass sie eingerichtet sind ein Sieb zu passieren, dessen Maschengröße 4mm beträgt und sie eine maximale Größe von kleiner 10 mm aufweisen, vorzugsweise von kleiner 8 mm.

4. Feueranzünder (B) nach einem der Ansprüche 1 bis 3, **dadurch gekennzeichnet, dass** das Paraffinpulver eine Korngrößenverteilung zwischen 600 µm und 2 mm aufweist, vorzugsweise zwischen 600 µm und 800 µm.

5. Feueranzünder (B) nach einem der Ansprüche 1 bis 4, **dadurch gekennzeichnet, dass** die Mischung einen Paraffingehalt umfasst, der zwischen 20Gewichts% und 60Gewichts% enthält.

6. Feueranzünder (B) nach einem der Ansprüche 1 bis 5, **dadurch gekennzeichnet, dass** die Mischung ferner ein Bindemittel umfasst, vorzugsweise Calcium Ligninsulfonat.

7. Verfahren zur Herstellung eines Feueranzünders (B) nach einem der Ansprüche 1 bis 6, umfassend die folgenden Schritte:
a) Bereitstellen einer Mischung gepresster Holz- oder Sägespäne und Paraffinpulver,
b) Einführen der Mischung in eine konkave Kompressionszelle (11c), die auf einer ersten Matrize getragen ist,
c) Komprimieren der Mischung in der Kompressionszelle (11c) mit mindestens einer zweiten Matrize,
d) Ausstoßen der kontinuierlichen Quantität der Mischung in der Kompressionszelle (11c), **dadurch gekennzeichnet, dass** die Kompressionszelle (11c) derart angpasst ist, dass
- sie am Feueranzünder (B) zwei Kontaktseiten (1a, 1b) in einer vorstehenden Stützzone (2a, 2b) ausbildet, die es ermöglicht, den Feueranzünder (B) über die Stützzone (2a, 2b) in einem stabilen Gleichgewicht auf eine Fläche (3) mit Teil (P1, P2) einer Kontaktseite (1, 1a, 1b) zu legen, der zur genannten Fläche (3) gerichtet ist, abseits der genannten Fläche (3) verbleibt und die gesamte Umgebung um die Stützzone (2a, 2b) bedeckt,
- die Kompressionszelle (11c) konkav entlang aller Transversalrichtungen (I-I, II-II) ist.

8. Verfahren nach Anspruch 7, **dadurch gekennzeichnet, dass** in den Schritten b) und c) die Mischung in eine Presse zur Verdichtung (10) eingeführt wird, welche die konkave Kompressionszelle (11c) mit zwei tangential aneinander anliegenden Drehkompressionsräder (11a, 11b) bildet, wobei die Kompression durch die Rotation der tangential aneinander anliegenden Drehkompressionsräder (11a, 11b) realisiert ist.

9. Verfahren nach Anspruch 8, **dadurch gekennzeichnet, dass** die zwei tangential aneinander anliegenden Drehkompressionsräder (11a, 11b) der Presse zur Verdichtung (10) Formgebungsräder sind, wobei jede konkave Kompressionszellen (11c) umfasst, die mit der Rotation der tangential aneinander anliegenden Drehkompressionsräder (11a, 11b) zusammentreffen, um eine Menge der Mischung einzuschließen und zu komprimieren.

10. Verfahren nach einem der Ansprüche 8 oder 9, **dadurch gekennzeichnet, dass** die Mischung in die Presse zur Verdichtung (10) unter Druck eingeführt wird, vorzugsweise mittels einer Zuleitungs- und Kompressionsschnecke.

11. Verfahren nach einem der Ansprüche 7 bis 10, **dadurch gekennzeichnet, dass** die Holzspäne oder die Sägemehlpartikel nach der Kompression einen Feuchtigkeitsgehalt von maximal 15 Gewichts% zeigen, vorzugsweise zwischen 8 Gewichts% und 12 Gewichts% besitzen.

12. Verfahren nach einem der Ansprüche 7 bis 11, **dadurch gekennzeichnet, dass** die Holzspäne oder die Sägemehlpartikel mit einem Sieb gesiebt sind, dessen Maschengröße 4mm beträgt und sie eine maximale Größe von kleiner 10 mm aufweisen, vorzugsweise von kleiner 8 mm.

13. Verfahren nach einem der Ansprüche 7 bis 12, **dadurch gekennzeichnet, dass** das Paraffinpulver eine Korngrößenverteilung zwischen 600 µm und 2 mm aufweist, vorzugsweise zwischen 600 µm und 800 µm.

14. Verfahren nach einem der Ansprüche 7 bis 13, **dadurch gekennzeichnet, dass** die Mischung einen Paraffingehalt umfasst, der zwischen 20 Gewichts% und 60Gewichts% enthält.

15. Verfahren nach einem der Ansprüche 7 bis 14, **dadurch gekennzeichnet, dass** die Mischung ferner ein Bindemittel umfasst, vorzugsweise Calcium Ligninsulfonat.

## Claims

1. Firelighter (B) ignitable by a user for initiating combustion of materials for a fire with an open hearth or closed hearth, comprising a compressed mixture of wood chips, or of sawdust, and of paraffin in powder form, comprising two contact faces (1a, 1b) with a prominent supporting zone (2a, 2b) allowing the firelighter (B) to rest on the supporting zone (2a, 2b) in stable equilibrium on a plane (3) with a portion (P1, P2) of contact face (1a, 1b) directed towards said plane (3) and remaining at a distance from said plane (3),
**characterized in that**:
- the firelighter (B) is configured in such a way that, in a position of stable equilibrium on a plane (3), the portion (P1, P2) of contact face (1a, 1b) directed towards said plane (3) and remaining at a distance from said plane (3) occupies the entire periphery of the prominent supporting zone (2a, 2b),
- the contact faces (1a, 1b) are convex in all transverse directions (I-I, II-II),
- the two convex contact faces (1a, 1b) meet at a continuous projecting peripheral edge (70),
- in section, the firelighter (B) has a section approximately in the shape of a biconvex lens, in the shape of an oval, or in the shape of an ellipse.

2. Firelighter (B) according to Claim 1, **characterized in that**:
- it comprises a coherent surface layer (6) of a mixture of wood chips or sawdust, and paraffin, the coherence of the surface layer (6) being provided by the paraffin, which adheres at least partially to the wood chips or the sawdust,
- inside the firelighter (B), under the coherent surface layer (6), the compressed mixture of wood chips or sawdust with paraffin in powder form is more friable than the mixture of the surface layer (6).

3. Firelighter (B) according to either one of Claims 1 or 2, **characterized in that** the wood chips or particles of sawdust have a size such that they are able to pass through a sieve with mesh of 4 mm, and have a maximum size less than 10 mm, preferably less than 8 mm.

4. Firelighter (B) according to any one of Claims 1 to 3, **characterized in that** the paraffin powder has a granulometry between 600 µm and 2 mm, preferably between 600 µm and 800 µm.

5. Firelighter (B) according to any one of Claims 1 to 4, **characterized in that** the mixture comprises a paraffin content between 20 and 60 wt%.

6. Firelighter (B) according to any one of Claims 1 to 5, **characterized in that** the mixture also comprises a binder, preferably calcium lignosulphite.

7. Process for manufacturing a firelighter (B) according to any one of Claims 1 to 6, comprising the following steps:
a) supplying a mixture of wood chips or sawdust and paraffin in powder form,
b) introducing the mixture into at least one concave compression cavity (11c) carried by a first die,
c) compressing the mixture in the compression cavity (11c) by means of a second die,
d) ejecting the quantity of mixture contained in the compression cavity (11c),
**characterized in that** the compression cavity (11c) is configured in such a way that:
- it endows the firelighter (B) with two contact faces (1a, 1b) with a prominent supporting zone (2a, 2b) allowing the firelighter (B) to rest on the supporting zone (2a, 2b) in stable equilibrium on a plane (3) with a portion (P1, P2) of contact face (1, 1a, 1b) directed towards said plane (3), remaining at a distance from said plane (3), and occupying the entire periphery of the prominent supporting zone (2a, 2b),
- the compression cavity (11c) is concave in all transverse directions (I-I, II-II).

8. Manufacturing process according to Claim 7, **characterized in that**, during steps b) and c), the mixture is fed into an agglomerating press (10) comprising two rotating tangential compression wheels (11a, 11b) provided with concave compression cavities (11c), compression being produced by the rotation of the rotating tangential compression wheels (11a, 11b).

9. Manufacturing process according to Claim 8, **characterized in that** the two rotating tangential compression wheels (11a, 11b) of the agglomerating press (10) are moulding wheels each comprising concave compression cavities (11c) that come together corresponding to one another during rotation of the rotating tangential compression wheels (11a, 11b) to enclose and compress a quantity of mixture.

10. Process according to either of Claims 8 or 9, **characterized in that** the mixture is fed under pressure into the agglomerating press (10), preferably by means of an endless screw (9) for feed and compression.

11. Process according to any one of Claims 7 to 10, **characterized in that** before compression the wood chips or sawdust have a moisture level below 15 wt%, preferably between 8 and 12 wt%.

12. Process according to any one of Claims 7 to 11, **characterized in that** the wood chips or sawdust used for the mixture are a sieved material obtained using a sieve with mesh size of 4 mm, and have a maximum size less than 10 mm, preferably less than 8 mm.

13. Process according to any one of Claims 7 to 12, **characterized in that** the paraffin powder has a granulometry between 600 µm and 2 mm, preferably between 600 µm and 800 µm.

14. Process according to any one of Claims 7 to 13, **characterized in that** the mixture comprises a paraffin content between 20 and 60 wt%.

15. Process according to any one of Claims 7 to 14, **characterized in that** the mixture also comprises a binder, preferably calcium lignosulphite.
